# EUROPÄISCHE PATENTSCHRIFT

(11) **EP 1 924 883 B1**
(45) Veröffentlichungstag und Bekanntmachung des Hinweises auf die Patenterteilung: **08.11.2017**
(21) Anmeldenummer: 06775920.9
(22) Anmeldetag: 04.09.2006
(51) Int. Cl.: G02F 1/13357, F21K 9/00, H01L 25/075

(54) **HINTERLEUCHTUNGSANORDNUNG MIT IN LEUCHTGRUPPEN ANGEORDNETEN HALBLEITERLICHTQUELLEN UND LEUCHTVORRICHTUNG**
BACKLIGHTING ARRANGEMENT WITH SEMICONDUCTOR LIGHT SOURCES ARRANGED IN LIGHT GROUPS AND LIGHTING DEVICE
SYSTEME DE RETRO-ECLAIRAGE COMPRENANT DES SOURCES DE LUMIERE A SEMI-CONDUCTEUR DISPOSEES EN GROUPES D'ECLAIRAGE, ET DISPOSITIF D'ECLAIRAGE

(30) Priorität: 03.09.2005 DE 102005042066
(43) Veröffentlichungstag der Anmeldung: 28.05.2008
(73) Patentinhaber: OSRAM Opto Semiconductors GmbH, 93055 Regensburg (DE)
(72) Erfinder: HÜTTNER, Josef, 93049 Regensburg (DE); OTT, Hubert, 93077 Bad Abbach (DE); WANNINGER, Mario, 93055 Regensburg (DE)
(74) Vertreter: Epping - Hermann - Fischer
(86) Internationale Anmeldenummer: PCT/DE2006/001550
(87) Internationale Veröffentlichungsnummer: WO 2007/025538

(56) Entgegenhaltungen:
- WO-A-2006/040937
- WO-A-2006/076899
- WO-A-2007/008048
- DE-A1- 10 051 159
- JP-A- 8 030 213
- JP-A- 11 003 051
- JP-A- 2003 187 605
- US-A1- 2004 218 388
- US-A1- 2005 001 537
- US-A1- 2005 052 590
- US-A1- 2005 169 007

## Beschreibung

Die Erfindung betrifft eine Hinterleuchtungsanordnung mit in Leuchtgruppen angeordneten Halbleiterlichtquellen. Ferner betrifft die Erfindung eine Leuchtvorrichtung, die eine derartige Hinterleuchtungsanordnung aufweist.

Bisher wurden zur Hinterleuchtung von Flächen wie LCD (liquid crystal display) vorwiegend Kaltkathodenfluoreszenz-Röhren verwendet. Diese strahlen vornehmend weißes Licht ab, benötigen jedoch erheblichen Platz und Strom.
In den letzten Jahren gewinnt die Verwendung von Halbleiterlichtquellen bei der Hinterleuchtung von LCD- oder TFT-Bildschirmen immer größere Bedeutung. Dazu ist es notwendig, dass eine Fläche durch Halbleiterlichtquellen gleichmäßig hinterleuchtet wird.
Für eine gleichmäßige farbige Wiedergabe auf dem auszuleuchtenden Bildschirm ist es insbesondere notwendig, eine homogene Farbmischung des emittierten Lichtes verschiedenfarbiger Halbleiterlichtquellen zu erreichen. Erst die Verwendung verschiedenfarbiger Halbleiterlichtquellen erfordert eine gleichmäßige Farbmischung der einzelnen Emissionen der Halbleiterlichtquellen. Diese homogene Farbmischung lässt sich durch einen großen Abstand der einzelnen Lichtquellen bezüglich der zu hinterleuchtenden Fläche erreichen. Zusätzlich können diffus streuende Materialien zwischen der zu hinterleuchtenden Fläche und den Lichtquellen angebracht werden.

Der vergrößerte Abstand bedingt allerdings unerwünscht große Bauhöhen. Diffusoren zwischen den Lichtquellen und den zu hinterleuchtenden Flächen führen typischerweise zu erheblichen Verlusten der Leuchtleistung. Dadurch wird die Gesamteffizienz einer derartigen Hinterleuchtung und ihre Einsetzbarkeit beeinträchtigt. Unter Gesamteffizienz der Hinterleuchtung ist hier die Leuchtleistung im Verhältnis zur aufgewandten Energie zu sehen.

In der WO 2004/031844 A1 findet sich ein Beispiel für eine Hinterleuchtung mit Halbleiterlichtquellen. Dort sind mehrere verschiedenfarbige Halbleiterlichtquellen zu Baugruppen zusammengefaßt und diese Leuchtgruppen in gleicher Orientierung in einem rechtwinkligen Raster angeordnet. Bei einem Einsatz einer derartigen Lichtquellenanordnung kann es schwierig sein, eine homogene Mischfarbe zu erzeugen. Durch die gleichartige Orientierung der Baugruppen besteht die Tendenz, dass Bereiche innerhalb der hinterleuchteten Fläche und vor allem am Rand starke Farbabweichungen aufweisen.

Die Farbmischung einer Baugruppe aus Halbleiterlichtquellen wird unter anderem dadurch beeinflusst, dass die einzelnen Halbleiterlichtquellen unterschiedliche Vorzugsrichtungen in der Abstrahlung besitzen. Ein ähnliches Verhalten tritt auf, wenn anstelle von Baugruppen mit verschiedenfarbigen Halbleiterlichtquellen Multichip-Packages, d.h. LED-Einheiten, welche mehrere verschiedenfarbige Halbleiterchips enthalten, verwendet werden.

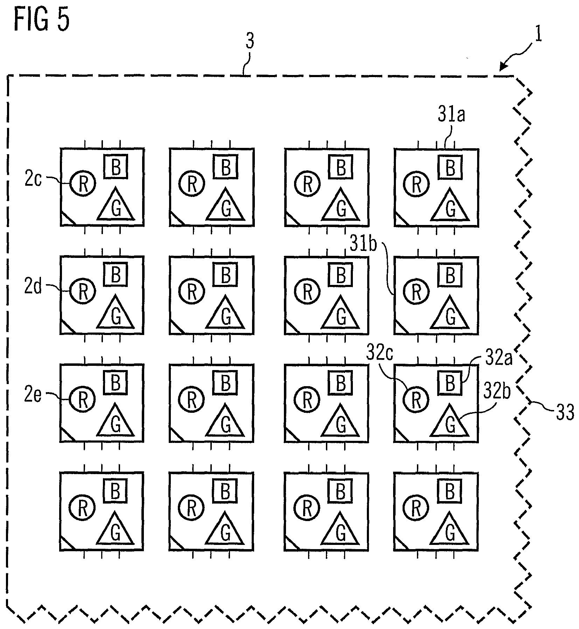

Figur 5 zeigt das Detail einer Hinterleuchtungsanordnung 1. Die gestrichelte Linie soll den Rand 3 der Hinterleuchtungsanordnung 1 darstellen. Dort sind an einer der dargestellten Randseite vier Leuchtgruppen angeordnet. Die einzelnen Leuchtgruppen sind gleichartig aufgebaut. Sie enthalten insbesondere drei Halbleiterchips unterschiedlicher Emissionsspektren. Die Halbleiterchips einer jeweiligen Leuchtgruppe sind in gleicher Art angeordnet. In diesem Beispiel handelt es sich um eine Multichippackage wie sie von der Firma Osram unter dem Namen Multitopled vertrieben wird. Erfindungsgemäße Leuchtgruppen beschränken sich allerdings nicht nur auf derartige Multichippackages, sondern umfassen alle Arten von Anordnungen strahlungsemittierender Halbleiterbauelemente.

In derartigen Hinterleuchtungsanordnungen sind meist gleiche beziehungsweise gleichartige Leuchtgruppen auf streifenförmigen Platinen in gleicher Orientierung angeordnet. Aus den streifenförmigen Platinen werden dann flächige Hinterleuchtungen zusammengesetzt.

In einer rechteckigen Gitteranordnung sind jeweils gleichartige Leuchtgruppen in gleicher Orientierung angeordnet. In diesem Falle beinhaltet eine Leuchtgruppe jeweils ein Strahlung emittierendes Halbleiterbauelement mit drei Strahlung emittierenden Halbleiterchips. Dies sind in diesem Ausführungsbeispiel jeweils ein blau-emittierender (B), ein grün-emittierender (G) bzw. ein rot-emittierender (R) Halbleiterchip 32a, 32b bzw. 32c. Da benachbarte Leuchtgruppen 31a, 31b jeweils gleiche Orientierung aufweisen und die einzelnen Halbleiterlichtquellen einer Leuchtgruppe Vorzugsrichtungen in der Abstrahlung aufweisen, kommt es hier nur bedingt zu einer homogenen Farbmischung der einzelnen Spektralbeiträge der Halbleiterlichtquellen.

Gemäß der Figur weisen benachbarte Leuchtgruppen 31a, 31b eine gleiche Orientierung auf. In diesem Ausführungsbeispiel sind randseitig entlang der vertikalen gestrichelten Linie nur rotfarbig emittierende Halbleiterbauelemente benachbart 2c, 2d, 2e. Dadurch kann es am Rand solcher Hinterleuchtungen zu inhomogenen Farbeffekten kommen. Die US 2005/001537 A1 offenbart eine Hinterleuchtungsanordnung gemäß dem Oberbegriff des Anspruchs 1.

In der JP 08-030213 ist eine Anzeigevorrichtung mit einer Mehrzahl von Leuchtgruppen beschrieben, die in unterschiedlicher Orientierung auf einem gemeinsamen Träger angeordnet sind. Die Leuchtgruppen sind Radial-LEDs, die jeweils einen roten, grünen und blauen Halbleiterchip aufweisen.

US 2004/218388 A1, DE 100 51 159 A1, JP 8 030213 A, JP 11 003051 A, US 2005/169007 A1, US 2005/052590 A1 und JP 2003 187605 A offenbaren ähnliche Anordnungen gegeneinander versetzt angeordneter LED-Leuchtgruppen.

WO 2006/076899 A, WO 2006/040937 A und WO 2007/008048 A sind Stand der Technik gemäß Artikel 54(3) EPÜ.

Der vorliegenden Erfindung liegt die Aufgabe zu Grunde, bei einer Hinterleuchtungsanordnung beziehungsweise Leuchtvorrichtung auf kostengünstige Art und Weise eine Verbesserung der Farbmischung herbeizuführen.
Diese Aufgabe wird durch eine Hinterleuchtungsanordnung beziehungsweise Leuchtvorrichtung gemäß Patentanspruch 1 beziehungsweise Patentanspruch 5 gelöst. Die vorliegende Erfindung ist in Anspruch 1 definiert.

Eine erfindungsgemäße Hinterleuchtungsanordnung, etwa ein Hinterleuchtungsmodul, umfasst mehrere gleichartige Leuchtgruppen, wobei jede Leuchtgruppe mindestens eine benachbarte Leuchtgruppe mit einer unterschiedlichen Orientierung aufweist.
Gemäß der Erfindung ist vorgesehen, dass verschiedene Halbleiterlichtquellen zu gleichartigen Leuchtgruppen zusammengefasst werden. Erfindungsgemäß sind dies RGB-Lichtquellen. Die Leuchtgruppen können allerdings auch verschiedene andere Farben beinhalten. Diese gleichartigen Leuchtgruppen werden so angeordnet, dass eine Fläche gleichmäßig hinterleuchtet ist. Vorzugsweise sind die Leuchtgruppen jeweils gleichartig aufgebaut. Das heißt, dass jede Leuchtgruppe die gleichen Halbleiterlichtquellen in gleicher Anordnung beinhaltet. Damit insbesondere Randeffekte inhomogener Farbmischung vermieden werden können, besitzt jede Leuchtgruppe der gleichen Anordnung mindestens eine benachbarte Leuchtgruppe in einer abweichenden Orientierung.

Zwei Leuchtgruppen einer Hinterleuchtungsanordnung sind benachbart, wenn eine gedachte Strecke zwischen den Zentren der beiden Leuchtgruppen die Einhüllende einer beliebigen dritten Leuchtgruppe der Hinterleuchtungsanordnung weder berührt noch schneidet.

Eine unterschiedliche Orientierung einer Leuchtgruppe bezüglich einer weiteren Leuchtgruppe ist beispielsweise gegeben, wenn der Abstand zwischen den Zentren der jeweils entsprechend gleichen Halbleiterlichtquellen gleichartiger benachbarter Leuchtgruppen verschieden ist von dem Abstand zwischen den Zentren der benachbarten Leuchtgruppen. Beispielsweise kann eine unterschiedliche Orientierung dadurch realisiert werden, dass benachbarte Leuchtgruppen bezüglich ihrer Hauptabstrahlrichtung gegeneinander verdreht sind.

Jede Leuchtgruppe einer erfindungsgemäßen Hinterleuchtungsanordnung weist mehrere Halbleiterlichtquellen in gleicher Anordnung auf. Dadurch wird die Hinterleuchtungsanordnung aus einer Anordnung gleichartiger Leuchtgruppen gebildet. Halbleiterlichtquellen können beispielsweise Halbleiterchips, organische Leuchtpolymere, einzelne LEDs oder OLEDs sein.

Erfindungsgemäße Leuchtgruppen können auch durch Zusammenfassung mehrerer LEDs zu einer gemeinsamen Leuchtgruppe gebildet sein.

Gemäß der Erfindung liefern mindestens zwei der Halbleiterlichtquellen unterschiedliche Farben oder Farbbeiträge.

Gemäß der Erfindung weist jede Leuchtgruppe mindestens eine rotes Licht emittierende Halbleiterlichtquelle, mindestens eine grünes Licht emittierende Halbleiterlichtquelle und mindestens eine blaues Licht emittierende Halbleiterlichtquelle auf.
Im Falle von Halbleiterchips, die als Halbleiterlichtquellen dienen, können die Leuchtgruppen einzelne Strahlung emittierende Halbleiterbauelemente sein, wobei jedes Halbleiterbauelement mehrere Halbleiterchips aufweist. Insbesondere können die Leuchtgruppen sogenannte "Multichip-LED-Packages" sein. Diese sind LED-Bauelemente, welche mehrere Halbleiterchips umfassen. Diese Halbleiterchips können unterschiedliche Emissionsspektren, z.B. rot (R),grün (G), blau (B), aufweisen. Solche Multichip-Packages werden z.B. von der Firma OSRAM unter dem Markennamen 6-lead Multitopleds vertrieben. Jene haben beispielhafterweise drei Halbleiterchips mit jeweils einem roten, einem grünen und einem blauen Emissionsspektrum und sechs elektrischen Kontakten. Die Erfindung sieht vor, dass die Leuchtgruppen in einer regelmäßigen Gitteranordnung angeordnet sind. Eine regelmäßige Gitteranordnung bewirkt dabei eine homogene Ausleuchtung der gesamten Fläche.

Zur homogenen Hinterleuchtung sieht die Erfindung vor, dass die regelmäßige Gitteranordnung eine hexagonale Gitterstruktur aufweist. Die einzelnen Leuchtgruppen sitzen dann jeweils auf den Eckpunkten der hexagonalen Gitterstruktur.

Gemäß der Erfindung sind mehrere Leuchtgruppen auf getrennten Trägern angeordnet.

Gemäß einer weiteren vorteilhaften Ausführungsform sind die Träger streifenförmig ausgebildet. Somit sind mehrere Leuchtgruppen auf streifenförmigen Trägern angeordnet. Die Hinterleuchtungsanordnung wird durch Anordnung mehrerer dieser streifenförmigen Träger nebeneinander gebildet. Dabei werden je zwei benachbarte Streifen gleichartigen Aufbaus um 180° bezüglich der Hauptabstrahlrichtung ihrer Leuchtgruppen zueinander verdreht. Die benachbarten Streifen sind dadurch antiparallel zueinander orientiert. Die Erfindung sieht vor, dass jeweils zwei benachbarte Leuchtgruppen um einen vorgegebenen Winkel, insbesondere um 90° bezüglich einer gedachten Achse entlang ihrer Hauptabstrahlrichtung zueinander verdreht sind. Wird diese Anordnung zusätzlich in einem rechtwinkligen Gitter angeordnet, kann erreicht werden, dass jede Leuchtgruppe der Hinterleuchtungsanordnung innerhalb ihrer eigenen Zeile und Spalte jeweils zwei unterschiedlich orientierte Nachbarleuchtgruppen aufweist. Dadurch werden Randeffekte inhomogener Farbmischung verringert. Alternativ sieht die Erfindung vor, dass zwei benachbarte Leuchtgruppen jeweils um 180° bezüglich einer gedachten Achse entlang ihrer Hauptabstrahlrichtung zueinander verdreht sind. Diese Ausführungsform erlaubt eine einfache Bestückung der Hinterleuchtungsanordnung bei gleichzeitig verbesserter Farbmischung.
Eine weitere vorteilhafte Ausführungsform der Hinterleuchtungsanordnung sieht vor, Leuchtgruppen reihenförmig in gleicher Orientierung auf einem streifenförmigen Träger anzubringen und beim Aufbau der Hinterleuchtungsanordnung die Leuchtgruppenstreifen nebeneinander anzuordnen, wobei zwei gleichartige benachbarte Leuchtgruppenstreifen jeweils antiparallel zueinander liegen.
Eine weitere vorteilhafte Ausführungsform der Erfindung sieht vor, dass die Leuchtgruppen auf einem Träger angeordnet sind, welcher durch eine Platine gebildet wird. Als Platinen kommen dabei alle gängigen Platinen in Frage, insbesondere aber auch Metallkernplatinen, welche eine gute Wärmeleitfähigkeit besitzen.
Eine weitere vorteilhafte Ausführungsform der Hinterleuchtungsanordnung sieht vor, dass die Halbleiterlichtquellen der Hinterleuchtungsanordnung, welche ein gleiches Emissionsspektrum aufweisen, jeweils getrennt ansteuerbar sind. Dadurch lassen sich Farbtoneffekte bei der Darstellung, insbesondere bei der Verwendung der Hinterleuchtungsanordnung in Verbindung mit einem Flachbildschirm, erzeugen.
Eine weitere vorteilhafte Ausführungsform der Hinterleuchtungsanordnung sieht vor, dass die Halbleiterlichtquellen der jeweiligen Leuchtgruppen einzeln ansteuerbar sind. Dadurch können, im Falle des Ausfalls einzelner Halbleiterlichtquellen, durch eine geeignete elektronische Nachregelung unerwünschte inhomogene Farbeffekte verringert oder vermieden werden.

Eine erfindungsgemäße Leuchtvorrichtung weist eine Hinterleuchtungsanordnung wie oben beschrieben und ein optisches Element auf. Vorteilhafterweise kann bei der erfindungsgemäßen Leuchtvorrichtung eine optimierte Farbhomogenität erzielt werden.

Zweckmäßigerweise ist das optische Element relativ zur Hinterleuchtungsanordnung derart angeordnet, dass von der Hinterleuchtungsanordnung emittiertes Licht das optische Element durchstrahlt.

Gemäß einer bevorzugten Variante ist die Leuchtvorrichtung eine Anzeigevorrichtung. Hierbei weist das optische Element besonders bevorzugt informationsgebende Eigenschaften auf. Insbesondere kann das optische Element ein LCD (Liquid Crystal Display) sein.

Gemäß einer alternativen Variante ist die Leuchtvorrichtung eine Beleuchtungsvorrichtung. In diesem Fall kann das optische Element lichtmischende oder lichtrichtende Eigenschaften aufweisen.

Als optisches Element mit lichtmischenden Eigenschaften ist beispielsweise ein Diffusor besonders geeignet. Vorliegend ist der Diffusor dadurch charakterisiert, dass er mindestens eine diffus streuende Lichtdurchtrittsfläche, die etwa aufgerauht sein kann, oder einen diffus streuenden Volumenbereich, der beispielsweise mit Streupartikeln versetzt ist, aufweist.

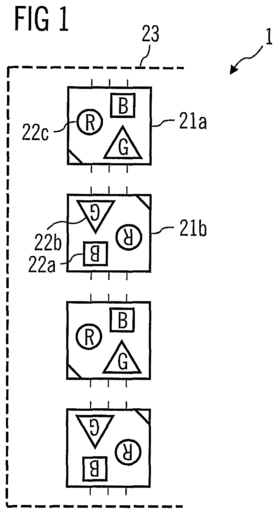

Ferner kann als optisches Element mit lichtrichtenden Eigenschaften eine BE(Brightness Enhancement)- Folie, insbesondere eine Prismenfolie, verwendet werden. Eine BE-Folie kann beispielsweise linienförmig angeordnete Prismenstrukturen aufweisen. Diese bewirken, dass von einer Unterseite in die Folie eingekoppeltes Licht teilweise transmittiert, teilweise reflektiert wird. Der transmittierte Teil ist auf einen vergleichsweise geringen Öffnungswinkel eingeschränkt. Die BE-Folie stellt im Wesentlichen einen Filter dar, der Licht in einem engen Winkel um die Hauptabstrahlungsrichtung transmittiert und den Rest der Strahlung reflektiert.
Weitere Vorteile, bevorzugte Ausführungsformen und Weiterbildungen der Erfindung ergeben sich im folgenden in Verbindung mit den in den Figuren 1 bis 5 erläuterten Ausführungsbeispielen. Dabei bezeichnen im folgenden die Begriffe "Ausführungsbeispiel" und "Ausführungsform" nur dann Ausführungsbeispiele der vorliegenden Erfindung, wenn sie jeweils alle im Anspruch 1 definierten Merkmale enthalten. Ansonsten bezeichnen diese Begriffe lediglich andere Beispiele, die für das Verstehen der vorliegenden in Anspruch 1 definierten Erfindung hilfreich sind. Es zeigen:
- Figur 1: eine schematische Darstellung einer ersten Hinterleuchtungsanordnung,
- Figur 2: eine Ausführungsform einer zweiten Hinterleuchtungsanordnung,
- Figur 3: eine weitere Ausführungsform einer dritten Hinterleuchtungsanordnung,
- Figur 4: eine weitere Ausführungsform einer vierten Hinterleuchtungsanordnung,
- Figur 5: schematische Darstellungen einer bereits beschriebenen Hinterleuchtungsanordnung zur Hinterleuchtung einer Fläche,
- Figur 6: eine schematische Schnittansicht eines ersten Ausführungsbeispiels einer erfindungsgemäßen Leuchtvorrichtung,
- Figur 7: eine schematische Schnittansicht eines zweiten Ausführungsbeispiels einer erfindungsgemäßen Leuchtvorrichtung.

In den Ausführungsbeispielen und Figuren sind gleiche oder gleich wirkende Elemente jeweils mit den gleichen Bezugszeichen versehen.

Die Darstellungen der Hinterleuchtungsanordnungen in den Figuren sind schematischer Natur. Die Elemente der Figuren entsprechen deshalb nicht den realen Gegebenheiten, sondern sind symbolisch dargestellt, um die Funktionsweise der Anordnungen besser verständlich machen zu können.

Bei der Hinterleuchtungsanordnung 1 gemäß Figur 1 tritt kein oder nur ein geringer störender Farbrand auf. Der vertikalen gestrichelten Linie des Randes 23 ist dort abwechselnd jeweils ein rot emittierendes Halbleiterbauelement 22c, ein grün emittierendes Halbleiterbauelement 22b und ein blau emittierendes Halbleiterbauelement 22a zugewandt. Diese alternierende Farbabfolge kommt daher zustande, dass jeweils zwei benachbarte gleichartig aufgebaute Leuchtgruppen 21a, 21b, die jeweils ein rot emittierendes Halbleiterbauelement 22c, ein grün emittierendes Halbleiterbauelement 22b und ein blau emittierendes Halbleiterbauelement 22a aufweisen, zueinander um 180° bezüglich ihrer Hauptabstrahlrichtung gedreht angeordnet sind.

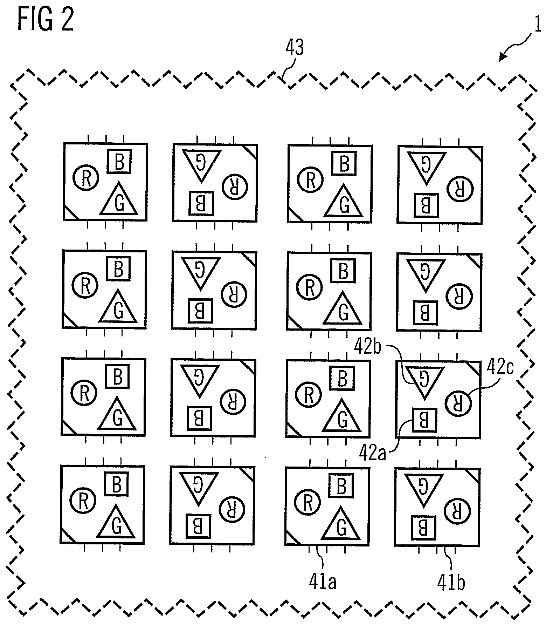

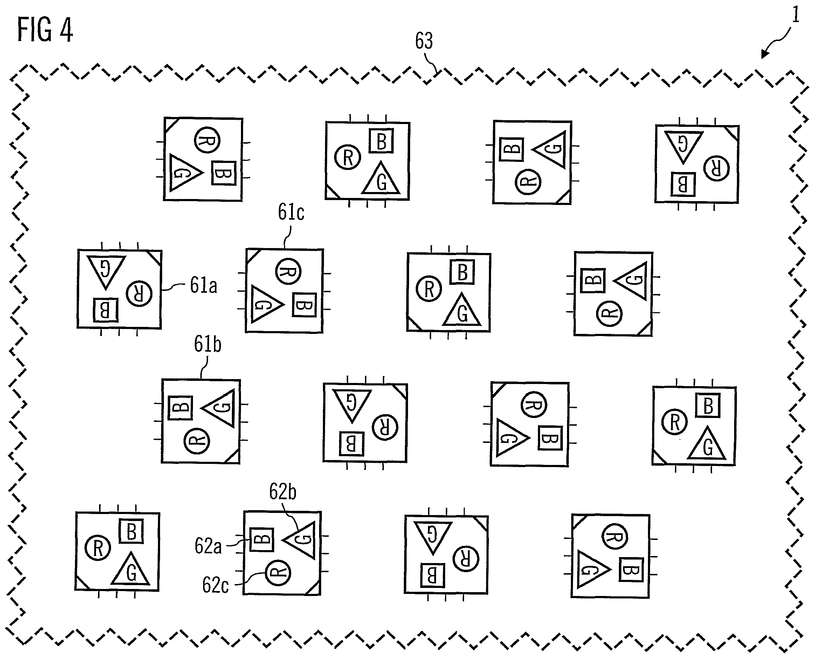

Figur 2 zeigt die schematische Darstellung einer zweiten vorteilhaften Ausführungsform. In dieser speziellen Ausführungsform beinhaltet eine Leuchtgruppe jeweils ein Strahlung emittierendes Halbleiterbauelement mit drei Strahlung emittierenden Halbleiterlichtquellen. Dies sind in diesem Ausführungsbeispiel jeweils ein blauemittierender 42a, ein grün-emittierender 42b und ein rot-emittierender 42c Halbleiterchip. Die Leuchtgruppen sind derart angeordnet, dass die Leuchtgruppen einer Spalte der rechteckigen Gitteranordnung jeweils gleiche Orientierung aufweisen. Die Leuchtgruppen 41a, 41b benachbarter Spalten jedoch sind jeweils bezüglich einer gedachten Achse parallel zur Hauptabstrahlrichtung gegenüber jenen der benachbarten Spalte um 180° gedreht angeordnet. Das heißt, dass jede zweite Leuchtgruppenspalte antiparallel zu ihrer Nachbarspalte angeordnet ist. Dadurch wird die Farbhomogenität über die gesamte Fläche verbessert. Erfindungsgemäße Leuchtgruppen beschränken sich allerdings nicht nur auf derartige Multichip Packages, sondern umfassen alle Arten von Anordnungen Strahlung emittierender Halbleiterbauelemente.
Der gezackt und gestrichelt dargestellte Rand 43 der Hinterleuchtungsanordnung 1 weist darauf hin, dass erfindungsgemäße Ausführungsformen nicht auf eine Anzahl von sechzehn Leuchtgruppen beschränkt sind, sondern je nach Anwendung in beliebige Richtungen um weitere Leuchtgruppen erweiterbar sind. An den horizontalen Rändern der Hinterleuchtungsanordnung 1 tritt ähnlich wie in Figur 1 eine alternierende Farbabfolge der Halbleiterlichtquellen auf.

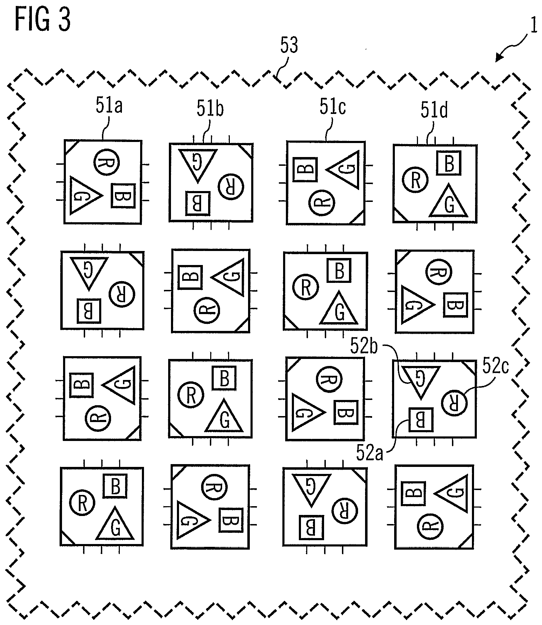

Figur 3 zeigt eine dritte Hinterleuchtungsanordnung 1. In dieser speziellen Ausführungsform beinhaltet eine Leuchtgruppe jeweils ein Strahlung emittierendes Halbleiterbauelement mit drei strahlungsemittierenden Halbleiterchips. Dies sind in diesem Ausführungsbeispiel jeweils ein blau-emittierender 52a, ein grün-emittierender 52b und ein rot-emittierender 52c Halbleiterchip. Benachbarte Leuchtgruppen sind jeweils um 90° zueinander gedreht. Das heißt, dass vier aufeinander folgende Leuchtgruppen 51a, 51b, 51c, 51d einer Spalte und/oder einer Zeile nicht die gleiche Orientierung aufweisen. Dadurch können sowohl Farbinhomogenitäten am Rand 53 der Hinterleuchtungsanordnung 1 als auch über die gesamte Fläche der Hinterleuchtungsanordnung 1 minimiert werden. Variationen in der Anordnung können gegebenenfalls jegliche Rotationswinkel bezüglich der Abstrahlrichtung der Leuchtgruppen annehmen. Bevorzugt ist jedoch eine gleichmäßige Variation der Rotationswinkel von aufeinander folgenden Leuchtgruppen. In der in Figur 3 dargestellten Anordnung besitzt jede Leuchtgruppe höchstens zwei Nachbarleuchtgruppen, welche die gleiche Orientierung aufweisen.
Der gezackt und gestrichelt dargestellte Rand 53 der Hinterleuchtungsanordnung 1 weist darauf hin, dass die Ausführungsform nicht auf eine Anzahl von sechzehn Leuchtgruppen beschränkt ist, sondern je nach Anwendung in beliebige Richtungen um weitere Leuchtgruppen erweiterbar sind. An den horizontalen und vertikalen Rändern 53 der Hinterleuchtungsanordnung 1 tritt ähnlich wie in Figur 1 eine alternierende Farbabfolge der Halbleiterlichtquellen auf. Für diese wie für alle anderen erfindungsgemäßen Ausführungsformen gilt, dass die verwendeten Leuchtgruppen nicht auf Multichippackages beschränkt sind. Insbesondere können Leuchtgruppen auch aus einer Zusammenfassung mehrerer einzelner Halbleiterlichtquellen wie beispielsweise LEDs gestaltet sein. Weiterhin beschränken sich die Leuchtgruppen nicht nur auf die Anordnung dreier gruppierter Halbleiterlichtquellen, sondern sie können eine beliebige Anzahl von Halbleiterlichtquellen enthalten. Auch die Emissionsspektren erfindungsgemäßer Leuchtgruppen sind nicht ausschließlich auf die Farben rot, grün und blau beschränkt, sondern können vielmehr alle Farben umfassen.
Eine weitere vorteilhafte Ausführungsform ist in Figur 4 dargestellt. Dort entspricht die Orientierung der Leuchtgruppen im Wesentlichen jener, welche in Figur 3 dargestellt ist. Jeweils ein blau-emittierender 62a, ein grün-emittierender 62b und ein rot-emittierender 62c Halbleiterchip sind in einer Multichippackage zu einer Leuchtgruppe 61a, 61b, 61c zusammengefasst. Die Hinterleuchtungsanordnungen 1 der Figuren 3 und 4 unterscheiden sich hauptsächlich dadurch, dass zwei benachbarte Spalten der Hinterleuchtungsanordnung 1 jeweils vertikal zueinander versetzt sind. Dadurch entsteht eine Hinterleuchtungsanordnung 1 mit einer Anordnung der Leuchtgruppen in einer Art hexagonalem Gitter. Dies bewirkt, dass eine größere Leuchtdichte erreicht werden kann, bei gleichzeitig verbesserter Farbhomogenität gegenüber ähnlichen Hinterleuchtungsanordnungen.
Für den gezackt und gestrichelt dargestellten Rand 63 der Hinterleuchtungsanordnung 1 der Figur 4 gelten sinngemäß die entsprechenden Ausführungen wie zu Figur 3.

Erfindungsgemäße Hinterleuchtungsanordnungen umfassen hexagonale Gitterstrukturen. Unter gitterstrukturartig angeordneten Leuchtgruppen versteht man hauptsächlich Anordnungen, bei denen die Leuchtgruppen auf den Gitterpunkten eines regelmäßigen Gitters liegen.

Bei einer anderen Ausführungsform der Erfindung können die Halbleiterlichtquellen und/oder die einzelnen Leuchtgruppenanordnungen mittels einer Steuerung getrennt angesteuert werden. Durch eine derartige Steuerung kann beispielsweise, durch Regelung der Leuchtstärke, der Kontrast in bestimmten Darstellungsbereichen erhöht werden. Weiterhin kann durch Variation der Leuchtstärke der einzelnen Halbleiterlichtquellen mit gleichem Emissionsspektrum der Farbton der Emission der Hinterleuchtungsanordnung variiert werden. Beim Ausfall einzelner Lichtquellen oder Leuchtgruppen kann eine Korrektur der durch den Ausfall bewirkten Emissionsänderung erzielt werden.

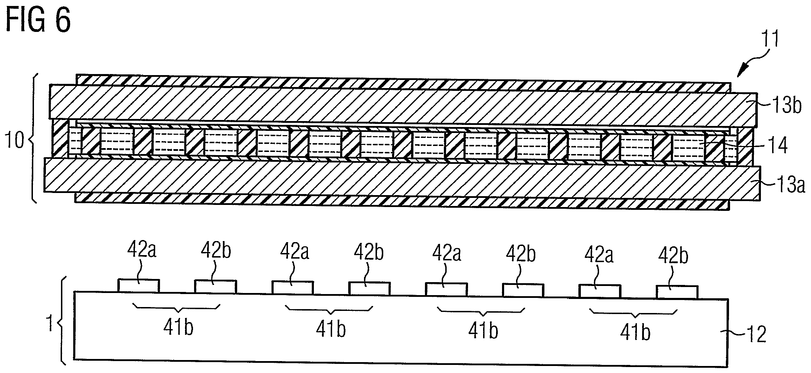

Die in Figur 6 dargestellte Leuchtvorrichtung 11 weist beispielsweise eine wie im Zusammenhang mit Figur 2 beschriebene Hinterleuchtungsanordnung 1 und ein optisches Element 10 auf.

Die Hinterleuchtungsanordnung 1 umfasst eine Mehrzahl von Halbleiterlichtquellen 42a und 42b, die auf einem Träger 12 angeordnet sind. Der Träger 12 kann beispielsweise eine Platine sein. Jeweils eine blaue Halbleiterlichtquelle 42a und eine grüne Halbleiterlichtquelle 42b sind Bestandteile einer Leuchtgruppe 41b.

Die Leuchtgruppen 41b sind auf dem Träger 12 derart angeordnet, dass das emittierte Licht das optische Element 10 durchstrahlt.

Im dargestellten Fall ist die Leuchtvorrichtung 11 eine Anzeigevorrichtung, wobei das optische Element 10, das ein LCD ist, informationsgebende Eigenschaften aufweist.
Zwischen einem ersten Substrat 13a und einem zweiten Substrat 13b ist ein Flüssigkristall 14 angeordnet, wobei zur Anzeige von Informationen ein elektrisches Feld an den Flüssigkristall 14 angelegt wird.

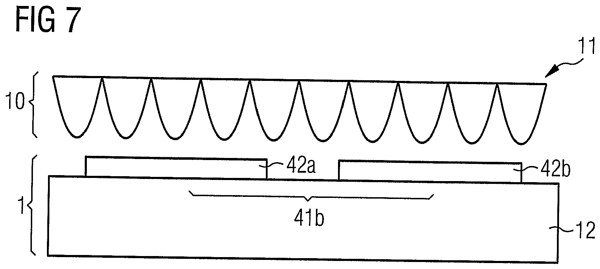

Figur 7 zeigt eine Leuchtvorrichtung 11 mit einer Hinterleuchtungsanordnung 1 und einem optischen Element 10, wobei die Leuchtvorrichtung 11 als Beleuchtungsvorrichtung dient. Das optische Element 10 kann lichtmischende oder lichtrichtende Eigenschaften aufweisen. Vorzugsweise ist das optische Elment 10 eine BE(Brightness Enhancement)- Folie mit einer geeigneten Struktur, beispielsweise einem Prismenarray oder einem Array aus inversen CPCs (Compound Parabolic Concentrators).
Die Erfindung ist nicht durch die Beschreibung anhand der Ausführungsbeispiele beschränkt.

## Patentansprüche

1. Hinterleuchtungsanordnung (1) mit mehreren gleichartigen Leuchtgruppen, bei der
- jede Leuchtgruppe mindestens eine benachbarte Leuchtgruppe mit einer unterschiedlichen Orientierung aufweist,
- jede Leuchtgruppe mehrere Licht emittierende Halbleiterchips in gleicher Anordnung aufweist,
- mindestens zwei der Halbleiterchips unterschiedliche Farben oder Farbbeiträge liefern,
- jede Leuchtgruppe mindestens einen rotes Licht emittierenden Halbleiterchip, mindestens einen grünes Licht emittierenden Halbleiterchip und mindestens einen blaues Licht emittierenden Halbleiterchip aufweist,
- mindestens zwei benachbarte Leuchtgruppen jeweils um 90° oder um 180° bezüglich einer gedachten Achse entlang ihrer Hauptabstrahlrichtung zueinander verdreht sind,
- mehrere Leuchtgruppen auf einem ersten streifenförmigen Träger und weitere Leuchtgruppen auf einem zweiten, zum ersten Träger benachbarten streifenförmigen Träger angebracht sind, wobei
- der erste und der zweite Träger antiparallel zueinander angeordnet sind,
- und wobei die Leuchtgruppen in einer regelmäßigen Gitteranordnung angeordnet sind,
**dadurch gekennzeichnet, dass**
die regelmäßige Gitteranordnung eine hexagonale Gitterstruktur aufweist.

2. Hinterleuchtungsanordnung nach Anspruch 1,
**dadurch gekennzeichnet, dass**
die Halbleiterchips unterschiedlicher Farben oder Farbbeiträge getrennt ansteuerbar sind.

3. Hinterleuchtungsanordnung nach einem der vorangegangenen Ansprüche,
**dadurch gekennzeichnet, dass**
die Halbleiterchips einzeln ansteuerbar sind.

4. Hinterleuchtungsanordnung gemäß einem der vorhergehenden Ansprüche,
**dadurch gekennzeichnet, dass**
der erste und der zweite Träger eine Platine ist.

5. Leuchtvorrichtung, die
eine Hinterleuchtungsanordnung gemäß einem der Ansprüche 1 bis 4 und ein optisches Element aufweist.

6. Leuchtvorrichtung nach Anspruch 5,
wobei das von der Hinterleuchtungsanordnung emittierte Licht
das optische Element durchstrahlt.

7. Leuchtvorrichtung nach Anspruch 5 oder 6,
wobei die Leuchtvorrichtung eine Anzeigevorrichtung ist.

8. Leuchtvorrichtung nach Anspruch 7, wobei
das optische Element informationsgebende Eigenschaften aufweist.

9. Leuchtvorrichtung nach Anspruch 7 oder 8,
wobei das optische Element ein LCD ist.

10. Leuchtvorrichtung nach Anspruch 5 oder 6,
wobei die Leuchtvorrichtung eine Beleuchtungsvorrichtung ist.

11. Leuchtvorrichtung nach Anspruch 10, wobei
das optische Element lichtmischende Eigenschaften aufweist.

12. Leuchtvorrichtung nach Anspruch 11,
wobei das optische Element ein Diffusor ist.

13. Leuchtvorrichtung nach Anspruch 10, wobei
das optische Element lichtrichtende Eigenschaften aufweist.

14. Leuchtvorrichtung nach Anspruch 13, wobei
das optische Element eine BE(Brightness Enhancement)- Folie ist.

15. Leuchtvorrichtung nach Anspruch 14, wobei
die BE(Brightness Enhancement)- Folie eine Prismenfolie ist.

## Claims

1. A backlighting arrangement (1) comprising a plurality of identical illumination groups, in which
- each illumination group comprises at least one adjacent illumination group with a different orientation,
- each illumination group comprises a plurality of light-emitting semiconductor chips in identical arrangement,
- at least two of the semiconductor chips provide different colors or color contributions,
- each illumination group comprises at least one red light-emitting semiconductor chip, at least one green light-emitting semiconductor chip, and at least one blue light-emitting semiconductor chip,
- at least two adjacent illumination groups in each case are rotated relative to one another by 90° or by 180° with respect to an imaginary axis along their main direction of radiation,
- a plurality of illumination groups are attached to a first strip-shaped carrier and other illumination groups are attached to a second strip-shaped carrier adjacent to the first carrier, wherein
- the first and second carriers are arranged antiparallel to one another,
- and wherein the illumination groups are arranged in a regular grid arrangement,
**characterized in that**
the regular grid arrangement has a hexagonal grid structure.

2. The backlighting arrangement according to claim 1,
**characterized in that**
the semiconductor chips of different color or color contribution can be driven separately.

3. The backlighting arrangement according to one of the preceding claims,
**characterized in that**
the semiconductor chips can be driven individually.

4. The backlighting arrangement according to one of the preceding claims,
**characterized in that**
the first and the second carrier is a circuit board.

5. An illumination device comprising a backlighting arrangement according to one of claims 1 to 4 and an optical element.

6. The illumination device according to claim 5,
wherein the light emitted by the backlighting arrangement passes through the optical element.

7. The illumination device according to claim 5 or 6,
wherein the illumination device is a display device.

8. The illumination device according to claim 7, wherein the optical element has the property of providing information.

9. The illumination device according to claim 7 or 8,
wherein the optical element is an LCD.

10. The illumination device according to claim 5 or 6,
wherein the illumination device is a lighting device.

11. The illumination device according to claim 10, wherein
the optical element has light-mixing properties.

12. The illumination device according to claim 11,
wherein the optical element is a diffuser.

13. The illumination device according to claim 10, wherein
the optical element has light-aligning properties.

14. The illumination device according to claim 13, wherein
the optical element is a BE (Brightness Enhancement) film.

15. The illumination device according to claim 14, wherein the BE (Brightness Enhancement) film is a prismatic film.

## Revendications

1. Agencement de rétroéclairage (1) comprenant plusieurs groupes d'éclairage du même type, dans lequel
- chaque groupe d'éclairage présente au moins un groupe d'éclairage voisin ayant une orientation différente,
- chaque groupe d'éclairage présente plusieurs puces à semi-conducteurs émettant de la lumière dans la même disposition,
- au moins deux des puces à semi-conducteur fournissant différentes couleurs ou différents apports de couleur,
- chaque groupe d'éclairage présente au moins une puce à semi-conducteur émettant de la lumière rouge, au moins une puce à semi-conducteur émettant de la lumière verte et au moins une puce à semi-conducteur émettant de la lumière bleue,
- au moins deux groupes d'éclairage voisins sont tournés l'un par rapport à l'autre le long de leur direction de rayonnement principal de respectivement 90° ou de 180° par rapport à un axe imaginaire,
- plusieurs groupes d'éclairage sont placés sur un premier support en forme de bande et des groupes d'éclairage supplémentaires sont placés sur un deuxième support en forme de bande, voisin au premier support,
- le premier et le deuxième supports étant disposés de manière antiparallèle l'un par rapport à l'autre,
- et les groupes d'éclairage étant disposés dans une disposition en grille régulière,
**caractérisé en ce que**
la disposition en grille régulière présente une structure de grille hexagonale.

2. Agencement de rétroéclairage selon la revendication 1,
**caractérisé en ce que**
les puces à semi-conducteur de couleurs différentes ou à apports de couleurs différents sont commandables de manière séparée.

3. Agencement de rétroéclairage selon l'une quelconque des revendications précédentes,
**caractérisé en ce que**
les puces à semi-conducteur sont commandables individuellement.

4. Agencement de rétroéclairage selon l'une quelconque des revendications précédentes,
**caractérisé en ce que**
le premier et le deuxième supports sont une platine.

5. Dispositif lumineux qui présente un agencement de rétroéclairage selon l'une quelconque des revendications 1 à 4 et un élément optique.

6. Dispositif lumineux selon la revendication 5,
la lumière émise par l'agencement de rétroéclairage traversant l'élément optique.

7. Dispositif lumineux selon la revendication 5 ou 6,
le dispositif lumineux étant un dispositif d'affichage.

8. Dispositif lumineux selon la revendication 7,
l'élément optique présentant des caractéristiques donnant des informations.

9. Dispositif lumineux selon la revendication 7 ou 8,
l'élément optique étant un LCD.

10. Dispositif lumineux selon la revendication 5 ou 6,
le dispositif lumineux étant un dispositif d'éclairage.

11. Dispositif lumineux selon la revendication 10,
l'élément optique présentant des caractéristiques à mélange de lumière.

12. Dispositif lumineux selon la revendication 11,
l'élément optique étant un diffuseur.

13. Dispositif lumineux selon la revendication 10,
l'élément optique présentant des caractéristiques d'orientation de lumière.

14. Dispositif lumineux selon la revendication 13,
l'élément optique étant un film BE (Brightness Enhancement).

15. Dispositif lumineux selon la revendication 10,
le film BE (Brightness Enhancement) étant un film de prismes.
